Europäisches Patentamt

European Patent Office

Office européen des brevets

(19)

(11) Veröffentlichungsnummer: **0 088 936**
**B1**

(12) **EUROPÄISCHE PATENTSCHRIFT**

(45) Veröffentlichungstag der Patentschrift:
31.07.85

(51) Int. Cl.⁴: **B 29 B 7/02**

(21) Anmeldenummer: **83101971.6**

(22) Anmeldetag: **01.03.83**

(54) Mischkopf zum Erzeugen eines vorzugsweise chemisch reaktionsfähigen Gemisches aus mindestens zwei Kunststoffkomponenten.

(30) Priorität: **11.03.82 DE 3208696**

(43) Veröffentlichungstag der Anmeldung:
**21.09.83 Patentblatt 83/38**

(45) Bekanntmachung des Hinweises auf die Patenterteilung:
**31.07.85 Patentblatt 85/31**

(84) Benannte Vertragsstaaten:
**AT BE CH DE FR GB IT LI NL SE**

(56) Entgegenhaltungen:
**DE - A - 2 847 504**
**DE - B - 2 612 812**

(73) Patentinhaber: **Elastogran Maschinenbau GmbH,
D-8021 Strasslach (DE)**

(72) Erfinder: **Wallner, Josef, Brauneckstrasse 2,
D-8150 Holzkirchen (DE)**

(74) Vertreter: **Springer, Hans Jörg, Dr. et al,
Carl-Bosch-Strasse 38, D-6700 Ludwigshafen (DE)**

## Beschreibung

Die Erfindung bezieht sich auf einen Mischkopf zum Erzeugen eines vorzugsweise chemisch reaktionsfähigen Gemisches aus mindestens zwei Kunststoffkomponenten mit einer Mischkammer, die Eintrittsöffnungen für die einzelnen Kunststoffkomponenten und einer Austrittsöffnung für das Kunststoffkomponenten-Gemisch besitzt, sowie mit einem in der Mischkammer angeordneten querschnittsgleichen Steuerkolben, der aus einer die Eintrittsöffnungen offenlassenden hinteren Stellung bis in den Bereich der vorderen Austrittsöffnung, dabei die Eintrittsöffnungen gegenüber der Mischkammer gleichzeitig absperrend hin- und herbewegbar ist, wobei zwischen dem Bereich der Eintrittsöffnungen und der Austrittsöffnung ein in die Mischkammer quer vorschiebbares Drosselorgan vorgesehen ist (DE-B2-2 612 812).

Mischköpfe der genannten Art arbeiten in der Regel nach dem Gegenstrominjektionsprinzip, d. h., die als Düsen oder Lochblenden gestalteten Einspritzöffnungen sind einander gegenüberliegend angeordnet.

Um eine gute Vermischung zu erzielen, ist innerhalb der Mischkammer ein bestimmter Druck einzuhalten. Er läßt sich wegen des geringen Volumens der Mischkammer nur schlecht messen. Deshalb nimmt man als Maß die theoretische Geschwindigkeit des die Mischkammer verlassenden Reaktionsgemisches. Zum Beispiel hat sich gezeigt, daß für die Herstellung von Integralschaumstoffen auf Basis Polyurethan bei einer Austrittsgeschwindigkeit von 20 bis 40 m/sec eine gute Vermischungsintensität gewährleistet ist. Der Mischkammerdruck wird bei den bekannten Mischköpfen durch Drallstücke oder Lochblenden im Auslaufstück hinter der Mischkammer erzielt. Da diese Mischköpfe in der Regel zum Füllen von Formwerkzeugen mit dem Reaktionsgemisch Anwendung finden, muß dafür gesorgt sein, daß das Gemisch unter beruhigter Strömung die Mischkammer verläßt, um mit laminarer Strömung in den Formhohlraum einzutreten. Diese Forderung erfüllt den Zweck, daß eine geschlossene Fließfront entsteht und keine Luftblasen in das Gemisch eingeschlagen werden, die Defekte in fertigem Formteil verursachen können. Erreicht wird diese Laminarströmung durch Umlenk- oder Beruhigungskegel im Auslaufstück.

Bei diesen mit Einbauten im Auslaufstück versehenen Mischköpfen ist jedoch ein Spülen mittels Lösungsmittel oder Preßluft notwendig. Die dabei als Verlust anfallenden Reaktionsmischreste verunreinigen die Umgebung.

Es ist bereits bekannt, ein Drosselorgan durch die Austrittsöffnung der Mischkammer in diese einzuführen, um die Durchmischung zu verbessern und durch weitgehende Verdrängung der in der Mischkammer vorhandenen Luft das Einschlagen von Luft in das Gemisch zu verhindern. Wegen des geringen Ausströmquerschnittes tritt jedoch eine hohe Ausströmgeschwindigkeit auf, so daß die angestrebte geschlossene Fließfront beim Eintritt in das Formwerkzeug nicht gewährleistet ist.

Neuartige zwangsgesteuerte Mischköpfe arbeiten in vorteilhafter Weise ohne Spülmittel, indem mittels eines Ausstoßkolbens das in der Mischkammer verbleibende Reaktionsgemisch gegen Ende des Formfüllvorganges ausgestoßen wird. Eine Anpassung des Mischkammerdruckes an die Erfordernisse ist ebensowenig möglich wie die Gewährleistung einer Laminarströmung von der Mischkammer in den Formhohlraum.

Da die Vermischungsintensität nicht ausreichend ist, hat man auch schon Nachvermischer zwischen Mischkammer und Formhohlraum angeordnet. Sie verbessern die Vermischung und beruhigen den aus der Mischkammer turbulent austretenden Gemischstrom. Solche Nachvermischer werden, wie auch der Angußkanal, in die Formtrennebene gelegt. Nach erfolgter Aushärtung muß das im Angußkanal und Nachvermischer verbliebene Gemisch vom Formteil als Abfall entfernt werden. Die am Formteil verbleibende Angußmarke ist störend und muß nachträglich bearbeitet werden.

Es ist weiterhin bekannt, bei Mischköpfen mit Ausstoßkolben zwischen dem Bereich der Eintrittsöffnungen und der Austrittsöffnung einen in die Mischkammer quer vorschiebbaren Staukörper vorzusehen, um die Vermischungsqualität über den Staudruck beeinflussen zu können. Dieser Staukörper ist aber nicht geeignet, dem aus der Mischkammer austretenden Gemischstrom ein ausreichend laminares, ruhiges Strömungsverhalten aufzuerlegen, um beim Einlaufen in das Formwerkzeug eine geschlossene Fließfront zu erhalten.

Der aus der DE-B2-2 612 812 bekannte Mischkopf soll eine gute Vermischungsintensität durch Einstellbarkeit des Mischkammerdruckes gewährleisten. Dabei ist im Bereich zwischen Mischkammer und Austrittsöffnung das Drosselorgan vorgesehen, das quer zur Mischkammer verschiebbar ist und das einen Durchlaß aufweist, durch den ein Ausstoßkolben in seine Ausstoßstellung bewegbar ist. Auf diese Weise wird eine Art Zusatzmischkammer gebildet, die jedoch eine Aufteilung des auftretenden Gemischstromes in mehrere Teilströme nicht zuläßt.

Mit der Erfindung soll ein Mischkopf geschaffen werden, der eine gute Vermischungsintensität durch Einstellbarkeit des Mischkammerdruckes gewährleistet, vollständig reinigungsfähig ist und ein beruhigtes Austreten des Kunststoffkomponenten-Gemisches ermöglicht.

Diese Aufgabe wird bei einem gattungsgemäßen Mischkopf durch die Maßnahme nach dem Kennzeichen des Anspruchs 1 gelöst.

Erfindungsgemäß werden die freien Strömungsquerschnitte einer in ihrem Querschnitt verhältnismäßig großen Mischkammer bzw.

Austrittsbohrung wesentlich reduziert. Gleichzeitig ist eine Verringerung des Mischkammervolumens möglich. Das Kunststoffkomponenten-Gemisch durchströmt die Austrittsbohrung mit unterschiedlichen Geschwindigkeiten und wird während seines Strömungsweges in mehrere Teilströme aufgeteilt, hierdurch zusätzlich vermischt und gelangt bei ausreichender Laminarströmung in ein Formwerkzeug. Der Mischkammerdruck kann dabei durch Einstellung des Hubes des Drosselorganes sowie des Steuerkolbens variiert werden. Vorzugsweise erfolgt die Bewegung des Steuerkolbens in zwei Teilhüben, so daß auch Mischfehler in der Vorlauf- und Nachlaufphase ausgeglichen werden können. Insbesondere gegen Ende eines Spritzzyklus läßt sich eine weitere Verbesserung der Mischgüte durch das zeitliche Zusammenwirken der Staukörper und des Steuerkolben mittels einer Steuereinrichtung, die elektrisch, hydraulisch, mechanisch und/oder pneumatisch arbeitet, erreichen.

Zweckmäßige Weiterbildungen des Mischkopfes nach der Erfindung ergeben sich aus den Unteransprüchen 2 und 3.

Beispielhafte Ausführungsformen des erfindungsgemäßen Mischkopfes sind in den Zeichnungen schematisch dargestellt und im folgenden näher erläutert. Es zeigt

Fig. 1 den Mischkopf im Längsschnitt in Mischstellung des Steuerkolbens und der Staukörper,

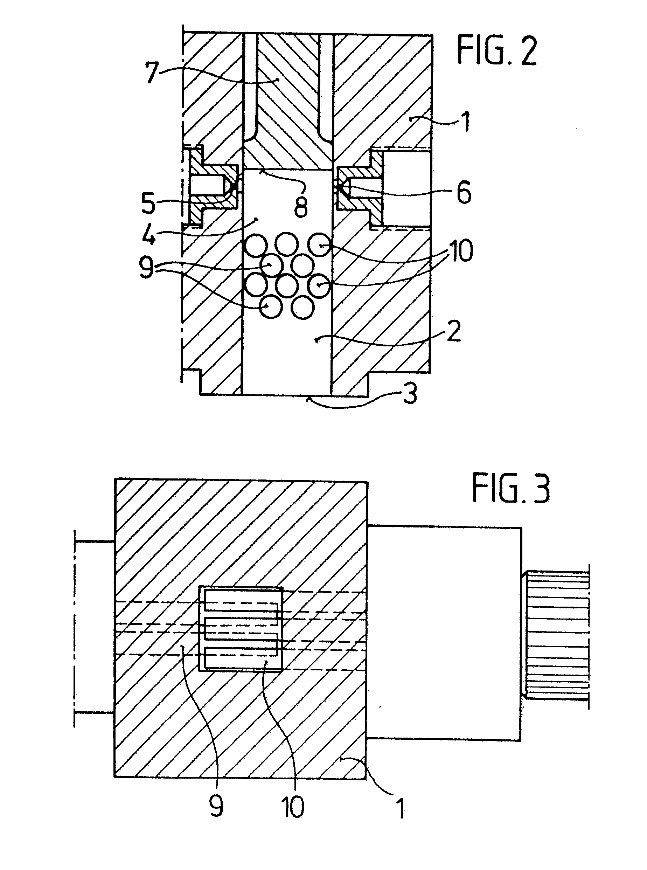

Fig. 2 eine der Fig. 1 entsprechende Seitenansicht im Schnitt,

Fig. 3 einen der Fig. 1 entsprechenden Teilschnitt einer Draufsicht,

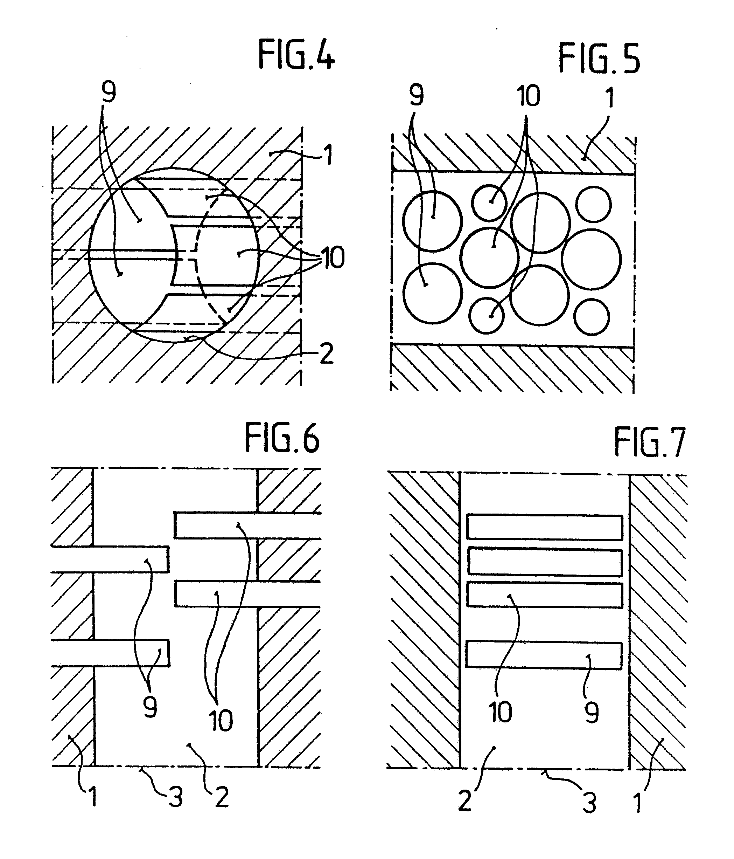

Fig. 4 + 5 Teilschnitte eines Mischkopfes mit kreisrunder Austrittsbohrung und kreisrunden Staukörpern in zwei Ansichten,

Fig. 6 eine Teilansicht eines Mischkopfes im Längsschnitt mit rechteckigen Staukörpern und

Fig. 7 eine Seitenansicht im Schnitt des Mischkopfes nach Fig. 6.

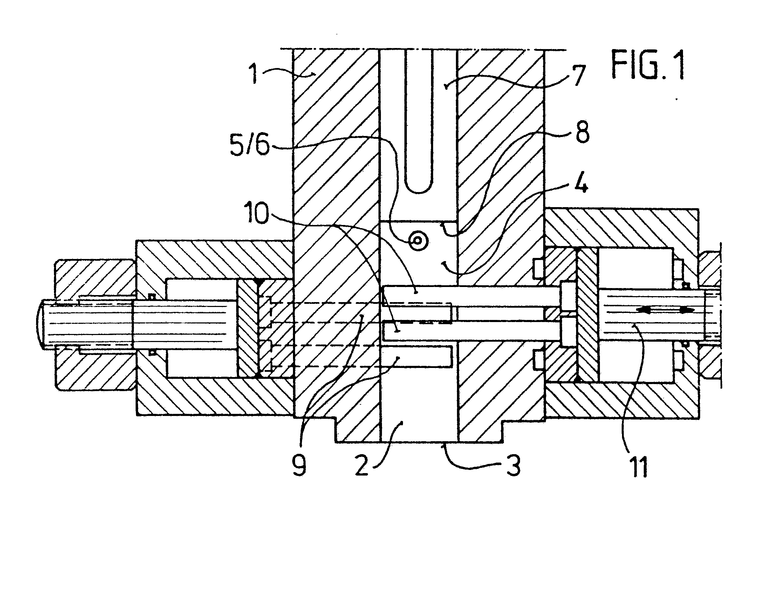

Im wesentlichen besteht die Mischvorrichtung aus einem Gehäuse 1, in dem eine Bohrung 2 für einen Steuerkolben 7 vorgesehen ist. Mit 3 ist die Austrittsöffnung der Bohrung bezeichnet. Ein Abschnitt der Bohrung ist als Mischkammer 4 ausgebildet, in die Eintrittsöffnungen 5 und 6 für jede Kunststoffkomponente münden. In der Mischstellung des Steuerkolbens (Fig. 1) wird die im Querschnitt zylindrische oder prismatische Mischkammer durch die Stirnfläche 8 des Steuerkolbens sowie durch mehrere Staukörper 9 und 10 begrenzt. Die Staukörper sind in Reihen oder versetzt nebeneinander und/oder hintereinander angeordnet und werden einzeln oder durch gemeinsame Verstelleinrichtungen 11 hin- und herbewegt. Bevorzugt werden die Staukörper von diametral gegenüberliegenden Seiten in die Mischkammer eingeführt. Ihre Eintauchtiefe ist dabei variabel einstellbar, wodurch unterschiedlich hohe Austragsleistungen des Kunststoffkomponentengemischs bei gleichem Mischkammerdruck möglich sind.

Durch die Staukörper 9, 10, die aus kreisrunden oder poligonförmigen Elementen bestehen können und zumindest annähernd parallel zueinander ausgerichtet sind, entsteht in der Bohrung 2 ein sogenanntes kaskadenförmiges Gebilde. Bei entsprechender Anordnung der Staukörper können auch unterschiedliche Durchtrittsquerschnitte für das aus der Mischkammer 4 austretende Kunststoffkomponenten-Gemisch erreicht werden. Diese Querschnittsveränderungen führen zu unterschiedlichen Geschwindigkeiten des Gemischstromes und damit zu einer zusätzlichen Vermischung der Kunststoffkomponenten. In dem in Strömungsrichtung unteren Bereich des kaskadenförmigen Gebildes sind die Abstände zwischen den Staukörpern größer gehalten, so daß sich eine Reduzierung der Strömungsgeschwindigkeit des Gemischstromes ergibt.

Sobald ein Spritzzyklus beendet ist, werden die Staukörper 9, 10 aus der Bohrung 2 zurückgezogen. Dabei erfolgt ein mechanisches Zwangsreinigen der Staukörper durch Abstreifen eventueller Gemischreste von ihren Oberflächen. Der in seinem Querschnitt der Bohrung angepaßte Steuerkolben 7 sorgt dann für eine endgültige Reinigung der Mischkammer 4 während seiner Hubbewegung bis in den Bereich der Austrittsöffnung 3.

Die unterschiedlichen Ausführungsformen ermöglichen es, die Mischwirkung und Nachhomogenisierung sowie die Strömungsgeschwindigkeit und das Strömungsprofil im Austrittsquerschnitt den Produkterfordernissen und der Form des Fertigteils optimal anzupassen.

**Patentansprüche**

1. Mischkopf zum Erzeugen eines vorzugsweise chemisch reaktionsfähigen Gemisches aus mindestens zwei Kunststoffkomponenten mit einer Mischkammer (4), die Eintrittsöffnungen (5 und 6) für die einzelnen Kunststoffkomponenten und eine Austrittsöffnung (3) für das Kunststoffkomponenten-Gemisch besitzt, sowie mit einem in der Mischkammer angeordneten querschnittsgleichen Steuerkolben (7), der aus einer die Eintrittsöffnungen offenlassenden hinteren Stellung bis in den Bereich der vorderen Austrittsöffnung, dabei die Eintrittsöffnungen gegenüber der Mischkammer gleichzeitig absperrend hin- und herbewegbar ist, wobei zwischen dem Bereich der Eintrittsöffnungen und der Austrittsöffnung ein in die Mischkammer quer vorschiebbares Drosselorgan vorgesehen ist, dadurch gekennzeichnet, daß das Drosselorgan aus mehreren in Reihe oder versetzt nebeneinander und/oder hintereinander angeordneten Staukörpern (9, 10) besteht, die von gegenüberliegenden Seiten der Mischkammer (4) in die Mischkammer einführbar sind, so daß mehrere Teilströme des Gemisches gebildet werden können.

2. Mischkopf nach Anspruch 1, dadurch gekennzeichnet, daß die Staukörper (9, 10) kreisrunde oder polygonförmig gestaltete Querschnitte aufweisen.

3. Mischkopf nach Anspruch 1, dadurch gekennzeichnet, daß die Abstände zwischen den Staukörpern (9, 10) unterschiedlich groß sind.

**Claims**

1. A mixing head for producing a preferably chemically reactive mixture from at least two plastic components, comprising a mixing chamber (4) which possesses inlet orifices (5 and 6) for the individual plastic components and an outlet orifice (3) for the mixture of plastic components, as well as a control piston (7), arranged in the mixing chamber and having the same cross-section as the latter, which piston can be moved to and for between a rear position, which leaves the inlet orifices open, and a position in the region of the front outlet orifice, where it simultaneously shuts off the inlet orifices from the mixing chamber, a throttle member which can be advanced transversely into the mixing chamber being provided between the region of the inlet orifices and the outlet orifice, wherein the throttle member consists of a plurality of restrictors (9, 10) arranged in rows or staggered, one next to the other and/or one behind the other, which restrictors can be introduced into the mixing chamber from opposite sides of the mixing chamber (4) to divide the mixture into a plurality of part-streams.

2. A mixing head as claimed in claim 1, wherein the restrictors (9, 10) have a circular or polygonal cross-section.

3. A mixing head as claimed in claim 1, wherein the gaps between the restrictors (9, 10) differ in size.

**Revendications**

1. Tête de mélange pour la fabrication d'un mélange, de préférence chimiquement réactif, d'au moins deux composants de matière plastique, comportant une chambre de mélange (4) qui possède des orifices d'entrée (5 et 6) pour les différents composants de matière plastique, et un orifice de sortie (3) pour le mélange des composants de matière plastique ainsi qu'un piston de commande (7), disposé dans la chambre de mélange d'égale section, et pouvant être animé d'un mouvement de va-et-vient entre une position arrière, laissant à découvert les orifices d'entrée, et le voisinage de l'orifice de sortie avant, en isolant simultanément les orifices d'entrée de la chambre de mélange, un organe d'étranglement, déplaçable transversalement dans la chambre de mélange étant prévu entre la zone des orifices d'entrée et l'orifice de sortie, caractérisée par le fait que l'organe d'étranglement est constitué de plusieurs corps de refoulement (9, 10) disposés à la file ou décalés les uns à côté des autres et/ou les uns derrière les autres, corps que l'on peut faire pénétrer dans la chambre de mélange, à partir des côtés opposés de cette chambre, de façon que puissent se former plusieurs courants partiels du mélange.

2. Tête de mélange selon la revendication 1, caractérisée par le fait que les corps de refoulement (9, 10) présentent des sections circulaires ou polygonales.

3. Tête de mélange selon la revendication 1, caractérisée par le fait que les distances entre les corps de refoulement (9, 10) sont de différentes valeurs.

FIG.1

FIG. 2

FIG. 3

FIG.4

FIG.5

FIG.6

FIG.7